# EUROPEAN PATENT SPECIFICATION

(11) **EP 4 246 076 B1**
(45) Date of publication and mention of the grant of the patent: **15.04.2026**
(21) Application number: 21892345.6
(22) Date of filing: 11.11.2021
(51) Int. Cl.: F28D 1/053, F28F 9/02, F28F 1/18, B23P 15/26, F28D 21/00, F28F 1/16

(54) **HEAT EXCHANGER AND HEAT EXCHANGER MANUFACTURING METHOD**
WÄRMETAUSCHER UND WÄRMETAUSCHERHERSTELLUNGSVERFAHREN
ÉCHANGEUR DE CHALEUR ET PROCÉDÉ DE FABRICATION D'ÉCHANGEUR DE CHALEUR

(30) Priority: 12.11.2020 KR 20200151052
(43) Date of publication of application: 20.09.2023
(73) Proprietor: LG Electronics Inc., Yeongdeungpo-gu Seoul 07336 (KR)
(72) Inventor: KIM, Hongseong, Seoul 08592 (KR); JUNG, Seungmo, Seoul 08592 (KR); KIM, Sungwoo, Seoul 08592 (KR); LEE, Hanchoon, Seoul 08592 (KR)
(74) Representative: Vossius & Partner Patentanwälte Rechtsanwälte mbB
(86) International application number: PCT/KR2021/016464
(87) International publication number: WO 2022/103178

(56) References cited:
- JP-A- 2002 206 889
- KR-A- 20060 028 809
- KR-A- 20090 038 359
- KR-A- 20160 015 627
- US-A1- 2008 169 085

## Description

### [Technical Field]

The present disclosure relates to a heat exchanger and a method of manufacturing the same. More particularly, the present disclosure relates to a heat exchanger with improved product assemblability and reduced brazing defect rate by including a header with a sheet having a plurality of corrugated portions and into which a fin tube is inserted, and a method of manufacturing the heat exchanger.

### [Background Art]

A heat exchanger can be generally used as a condenser or an evaporator in a refrigeration cycle device including a compressor, a condenser, an expansion device, and an evaporator. Also, a heat exchanger can be installed in an air conditioner, a refrigerator, or the like to exchange heat between a refrigerant and air.

A heat exchanger can be classified into a finned tube type heat exchanger, a microchannel type heat exchanger, and the like. The heat exchanger may include a plurality of tubes through which refrigerant flows to exchange heat with external air, a fin coupled to the plurality of tubes to increase the heat exchange capability, and a header in communication with the plurality of tubes to supply refrigerant.

Meanwhile, in the related art, an insertion hole is formed on one surface of a header through slotting processing or wire cutting and then a tube is inserted into the insertion hole.

For example, Korean Patent Registration No. 10-0644135 discloses a header having a plurality of insertion holes to which end portions of tubes are coupled.

However, in the case of a heat exchanger of the related art, a gap between a header and a fin tube is increased due to tolerances generated when manufacturing the fin tube and machining an insertion hole corresponding to the shape of the fin tube, causing the high defect rate of brazing.

In addition, the related art heat exchanger is disadvantageous in that the structural stability of coupling between components is low.

Also, the related art heat exchanger is not suitable for the assembly of a header and a fin tube, due to a numerous number of fin tubes passing through insertion holes and a narrow interval between the insertion holes.

Examples of the related art include Korean Patent Registration No. 10-0644135 (published on November 10, 2006), Korean Utility Model Publication No. 20-2007-0017024 (published on April 27, 2009), Korean Utility Model Registration No. 20-0432601 (published on December 5, 2006), Korean Patent Registration No. 10-1447072 (published on October 6, 2014), and Korean Laid-Open Patent Publication No. 10-2019-0097632 (published on August 21, 2019).

KR 2009 0038359 (A) provides a header tank structure of heat exchanger that includes a joint which is combined with the flection where coupling grooves is formed along the longitudinal direction.

KR 2016 0015627 (A) relates to a heat exchanger that comprises: a pair of header tanks which comprise a header where multiple insertion holes are arranged in a longitudinal direction and a tank coupled to the header, and is arranged at a predetermined interval.

### [Disclosure of Invention]

### [Technical Problem]

It is an objective of the present disclosure to provide a heat exchanger with a decreased gap between a fin tube and a header, and a reduced brazing defect rate.

It is another objective of the present disclosure to provide a heat exchanger with improved structural coupling stability between a fin tube and a header.

It is yet another objective of the present disclosure to provide a heat exchanger that can facilitate the assembly of a fin tube and a header.

The objectives of the present disclosure are not limited to the objectives described above, and other objectives not stated herein will be clearly understood by those skilled in the art from the following description.

### [Technical Solution]

The present invention is specified by the independent claims. Preferred embodiments are defined by the dependent claims. According to the present invention, a heat exchanger includes: a plurality of fin tubes each comprising a fin for heat transfer and a tube through which refrigerant flows, the fin and the tube being integrally formed with each other; and a header coupled to one end portions of the plurality of fin tubes. The header may include: a header body open at one side; and a sheet disposed on the open one side of the header body, having a plurality of slits into which the one end portions of the plurality of fin tubes are respectively inserted, and bent into a corrugated shape to define a plurality of corrugated portions. The plurality of corrugated portions of the sheet are compressed in a longitudinal direction of the sheet into the header body.

As one end of the fin tube is into the sheet having the corrugated portion and then the corrugated portion of the sheet is compressed, a gap between the header and the fin tube is reduced to thereby increase adhesion between the sheet and the fin tube, allowing tolerance and refrigerant leakage to be reduced. In addition, the fin tube is easily inserted by increasing an interval between the corrugated portions formed on the sheet, thereby facilitating the product assembly.

The plurality of slits may extend in a direction intersecting a direction in which the plurality of corrugated portions are arranged.

The plurality of slits may extend in a direction perpendicular to the direction in which the plurality of corrugated portions are arranged.

The plurality of corrugated portions may include: a plurality of crest portions and a plurality of trough portions alternately arranged with each other; a plurality of flat portions formed at intervals between the plurality of crest portions and the plurality of trough portions in an inclined manner. The plurality of slits may extend along the plurality of crest portions and/or the plurality of trough portions.

As the fin tube inserted into the slit receives pressure in a direction in which the sheet is compressed, adhesion between the sheet and the fin tube may be improved, allowing airtightness to be achieved, refrigerant leakage to be prevented, and structural stability to be ensured.

A pair of flat portions, formed adjacent to a slit among the plurality of slits, may face opposite surfaces of one end portion of one of the plurality of fin tubes inserted into the slit.

Each of the plurality of slits may be formed on one of the plurality of crest portions. When a portion between each trough portion and each flat portion is defined as a boundary portion, the boundary portion may be in contact with one end portion of a fin tube, among the plurality of fin tubes, inserted into one of the plurality of slits.

The sheet may be configured such that the plurality of corrugated portions are compressible in a direction in which the plurality of corrugated portions are arranged. A pitch between the plurality of trough portions may decrease when the sheet is compressed.

The one end portions of the plurality of fin tubes may be inserted at least as deep as a thickness of the sheet.

The plurality of slits may each include: a fin slit portion into which the fin is inserted; and a tube slit portion into which the tube is inserted.

The sheet may include a groove extending from the tube slit portion along the corrugated shape of the sheet and recessed to surround the tube inserted into the tube slit portion.

At least a portion of the groove may be in close contact with the tube.

The header body may be provided with a first recess recessed from an inner surface thereof to extend in a first direction and guiding insertion of the sheet in the first direction.

The first direction may be a direction in which the plurality of corrugated portions are arranged.

Since the sheet is inserted into the first recess and is compressed in a direction in which the plurality of corrugated portions are arranged, the sheet may preferably be inserted into the first recess in the direction in which the plurality of corrugated portions are arranged.

The first recess may include: a sheet insertion hole connected to an outside so as to allow the sheet to be inserted from the outside; and a sheet guide recess extending from the sheet insertion hole in the first direction and guiding insertion of the sheet.

The sheet insertion hole may have a shape that gradually narrows toward a direction in which the sheet is inserted.

Accordingly, even when the sheet is inserted into the first recess while the sheet is not in a correct position, the sheet may be guided to the correct position to thereby facilitate the insertion of the sheet into the first recess.

The header may include a header cover coupled to one end portion of the header body to be in contact with one end portion of the sheet.

The header body may be provided with a second recess recessed from an inner surface thereof to extend in a second direction and guiding insertion of the header cover in the second direction.

The second direction may be a direction perpendicular to a direction in which the plurality of corrugated portions are arranged.

Accordingly, although the sheet compressed in one direction applies pressure to the header cover while being stretched in another direction, the header cover may be securely fixed to thereby achieve the structural stability.

A side surface and a lower surface of the header cover may extend in the second direction. The header cover may include a cover edge portion formed between the side surface and the lower surface of the header cover and extending in a rounded shape from the lower surface of the header cover to the side surface of the header cover.

The second recess may include: a cover insertion hole connected to an outside so as to allow the header cover to be inserted from the outside; and a cover guide recess extending from the cover insertion hole in the second direction and guiding insertion of the header cover.

The cover insertion hole may have a shape that gradually narrows toward a direction in which the header cover is inserted.

Accordingly, even when the header cover is inserted into the second recess while the header cover is not in a correct position, the header cover may be guided to the correct position to allow the header cover to be easily inserted into the second recess.

A gap between the sheet and each fin tube may be brazed with a filler metal.

According to another aspect of the subject matter described in this application, a method of manufacturing a heat exchanger is provided. The method may include: placing a sheet having a plurality of corrugated portions and a plurality of slits formed along the plurality of corrugated portions on one open side of a header body to be longer than a length of the header body; inserting one end portions of a plurality of fin tubes into the plurality of slits; and compressing the plurality of corrugated portions in a longitudinal direction of the sheet to allow the sheet to be drawn into the header body.

The method may further include, after the sheet is drawn into the header body, coupling a header cover to a side surface portion of the header body.

The method may further include brazing a gap between the sheet and each fin tube with a filler metal.

Details of other embodiments are included in the detailed description and the accompanying drawings.

### [Advantageous Effects]

A heat exchanger and a method of manufacturing the heat exchanger according to the present invention have one or more of the following effects.

First, by inserting one end of a fin tube into a sheet having a corrugated portion and then compressing the corrugated portion of the sheet, a gap between the fin tube and a header may be reduced to thereby improve the quality of brazing and prevent refrigerant leakage.

Second, the structural stability of a coupling structure may be improved by compressing a sheet into which a fin tube is inserted and pressing the fin tube.

Third, as a pitch of a sheet having a corrugated portion is produced to be relatively large, a fin tube may be easily inserted into the sheet to thereby improve the assemblability.

The effects of the present invention are not limited to the effects described above, and other effects not mentioned will be clearly understood by those skilled in the art from the claims.

### [Brief Description of Drawings]

FIG. 1 is a perspective view of a heat exchanger according to the present invention.
FIG. 2 is a perspective view of a header according to the present invention.
FIG. 3 is an exploded perspective view of a header and its components according to the present invention.
FIG. 4 is an enlarged view illustrating a portion of a component of the header shown in FIG. 3.
FIG. 5 is a perspective view of a sheet according to an embodiment of the present disclosure.
FIG. 6 is a view illustrating a portion of the sheet of FIG. 5.
FIG. 7 is a perspective view illustrating the state before and after compressing a sheet according to an embodiment of the present disclosure. (a) of FIG. 7 illustrates the sheet before being compressed, and (b) of FIG. 7 illustrates the sheet after being compressed.
FIG. 8 is a side view illustrating the state before and after compressing a sheet according to an embodiment of the present disclosure. (a) of FIG. 8 illustrates a side portion of (a) of FIG. 7, and (b) of FIG. 8 illustrates a side portion of (b) of FIG. 7.
FIG. 9 is an enlarged view of a portion of (b) of FIG. 8.
FIG. 10 is a cross-sectional view cut along the incision line of FIGS. 7 and 8 and seen from above. (a) of FIG. 10 is a view cut along the line A1-A2 of (a) of FIG. 7 and (a) of FIG. 8, and (b) of FIG. 10 is a view cut along the line B1-B2 of (b) of FIG. 7 and (b) of FIG. 8.
FIGS. 11 to 13 illustrate a sequence of steps in a method of manufacturing a heat exchanger according to the present invention.
FIG. 14 is a block diagram illustrating a method of manufacturing a heat exchanger according to the present invention.

### [Mode for Invention]

The above and other aspects, features and other advantages of the present disclosure will be more clearly understood from the following detailed description taken in conjunction with the accompanying drawings. Exemplary embodiments will now be described more fully hereinafter with reference to the accompanying drawings; however, they may be embodied in many different forms and should not be construed as limited to the embodiments set forth herein. Rather, these embodiments are provided so that this disclosure will be thorough and complete, and will fully convey the scope of the exemplary embodiments to those skilled in the art. The same reference numerals are used throughout the drawings to designate the same or similar components.

Spatially relative terms, such as, "below", "beneath", "lower", "above", "upper", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated at other orientations) and the spatially relative terms used herein interpreted accordingly.

The terminology used herein is for the purpose of describing particular embodiments only and is not intended to limit the full scope of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated components, steps, and/or operations, but do not preclude the presence or addition of one or more other components, steps, and/or operations.

Unless otherwise defined, all terms (including technical and scientific terms) used herein have the same meaning as commonly understood by one of ordinary skill in the art to which example embodiments belong. It will be further understood that terms, including those defined in commonly used dictionaries, should be interpreted as having a meaning that is consistent with their meaning in the context of the relevant art and will not be interpreted in an idealized or overly formal sense unless expressly so defined herein.

In the drawings, the thickness or size of each component is exaggerated, omitted, or schematically shown for the sake of convenience and clarity. Also, the size and area of each component do not entirely reflect the actual size or area thereof.

Hereinafter, a heat exchanger according to the present invention will be described with reference to the accompanying drawings.

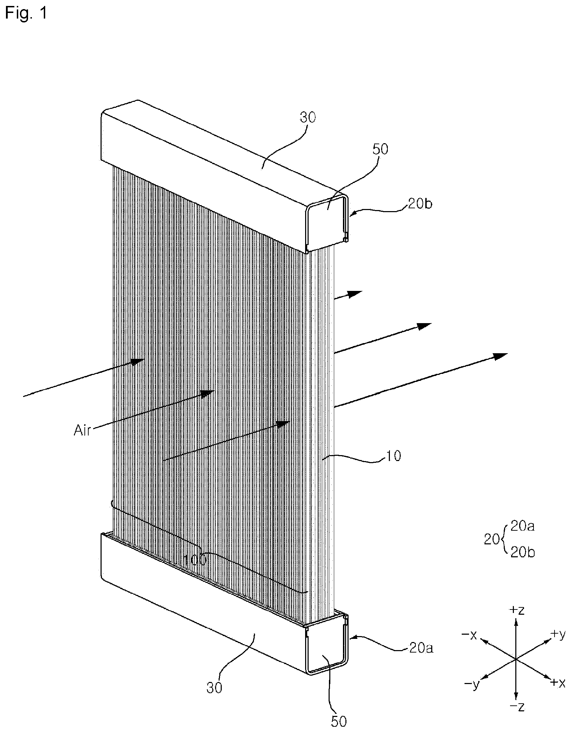

In the following description, with respect to FIGS. 1 to 11, all areas (or joints) where insertion, coupling, fitting, contact, joining, or assembly is made between two or more components of the heat exchanger may be formed by brazing. A filler metal may be added to all areas where insertion, coupling, fitting, contact, joining, or assembly is made between two or more components of the heat exchanger. The heat exchanger may be put into a furnace with a filter metal being added thereto and then be exposed to a high-temperature condition for a certain period of time to be brazed. The description related to the brazing will be omitted below.

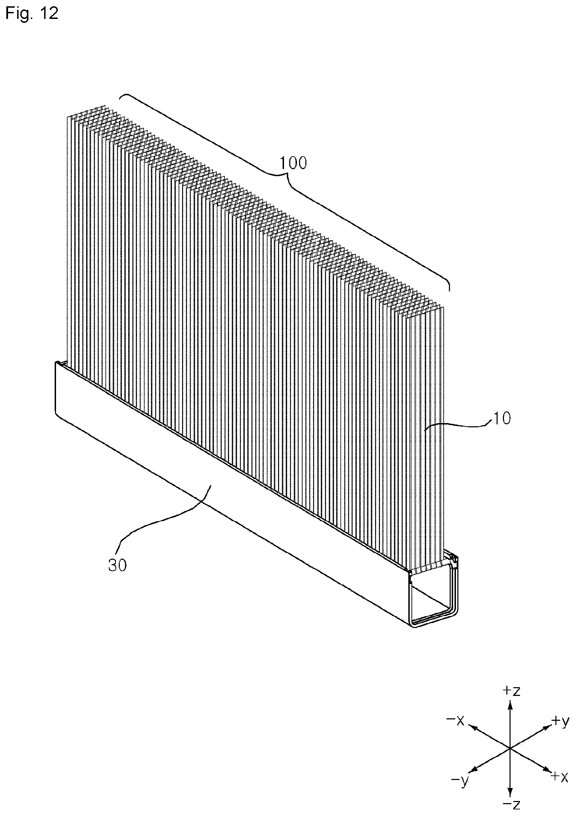

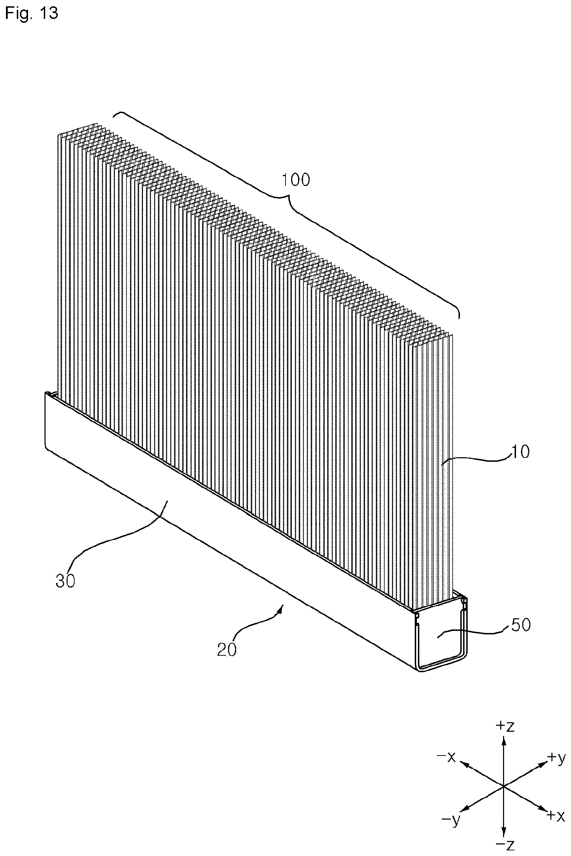

Hereinafter, the directions of the heat exchanger and its components according to the present invention will be defined based on the coordinate system shown in FIGS. 1 to 13.

The x-axis direction may be defined as the front-and-rear direction. Based on the origin, the +x axis direction may be the front direction, and the -x axis direction may be the rear direction. The y-axis direction may be defined as the left-and-right direction. Based on the origin, the +y axis direction may be the right direction, and the -y axis direction may be the left direction. The z-axis direction may be defined as the up-and-down direction. Based on the origin, the +z axis direction may be the up direction, and the -z axis direction may be the down direction.

Referring to FIG. 1, the heat exchanger includes a fin tube 10 and a header 20.

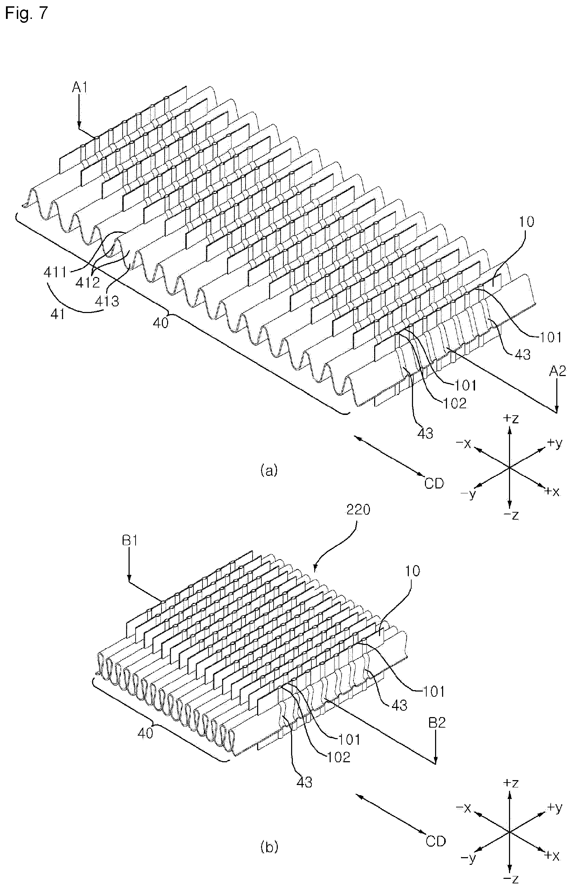

The fin tube 10 may extend in the up-and-down direction. The fin tube 10 is configured such that a fin 101 for heat transfer and a tube 102 through which refrigerant flows are integrally formed with each other (see FIG. 7). The fin tube 10 is provided in plurality and may be arranged in one direction. A plurality of fin tubes 100 may be spaced apart from one another to be arranged side by side. The plurality of fin tubes 100 may be disposed along a longitudinal direction of the header 20 to be coupled to the header 20.

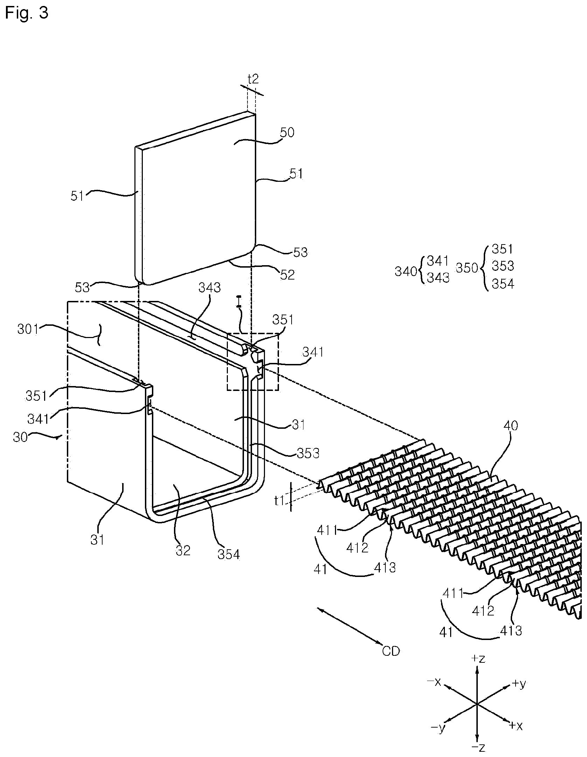

The header 20 is coupled to at least one end portions of the plurality of fin tubes 100. The header 20 may be coupled to each of both end portions of the plurality of fin tubes 100. The header 20 may be hollow to have therein a space 301 (see FIG. 3) through which refrigerant flows. The space 301 formed in the header 20 may be in communication with the plurality of fin tubes 100. The header 20 may include a refrigerant inlet (not shown) through which refrigerant is introduced and a refrigerant outlet (not shown) through which refrigerant is discharged.

The header 20 may include a second header 20b coupled to one end portions of the plurality of fin tubes 100 and a first header 20a coupled to another (or opposite) end portions of the plurality of fin tubes 100.

The first header 20a may be disposed on the lower side of the plurality of fin tubes 100, and may be coupled to the one end portions of the plurality of fin tubes 100. The first header 20a may be connected to the refrigerant outlet (not shown).

The second header 20b may be disposed on the upper side of the plurality of fin tubes 100, and may be coupled to the another end portions of the plurality of fin tubes 100. The second header 20b may be connected to the refrigerant inlet (not shown).

Refrigerant may flow into a space 301 in the second header 20b through the refrigerant inlet (not shown). The refrigerant introduced into the second header 20b may flow into a space 301 in the first header 20a through the plurality of fin tubes 100. The refrigerant introduced into the first header 20a may be discharged to the outside through the refrigerant outlet (not shown).

When refrigerant is flowing in the plurality of fin tubes 10, air may exchange heat with the refrigerant while passing between the plurality of fin tubes 10.

Hereinafter, for the sake of convenience, the header 20 will be described based on the first header 20a, and the second header 20b may have the same shape, structure, and configuration as the first header 20a.

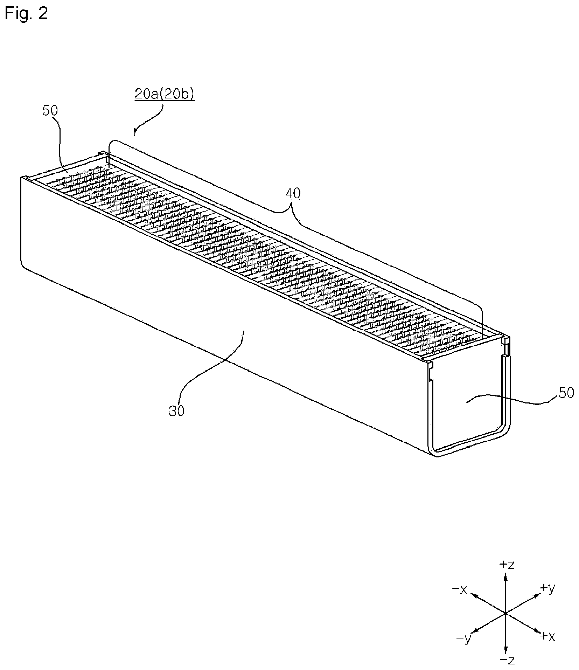

Referring to FIG. 2, the header 20 includes a header body 30, preferably a header cover 50, and a sheet 40.

The header body 30 may have a hollow shape, so as to have therein the space 301 (see FIG. 3) through which refrigerant flows. One side or surface of the header body 30 may be open (see FIG. 3). An upper surface of the header body 30 may be open. Front and rear surfaces of the header body 30 may be open. The open surfaces of the header body 30 may be in communication with the space 301. The header body 30 may have a shape extending in one direction. The header body 30 may have a shape extending in the front-and-rear direction.

The sheet 40 is disposed on the open one surface of the header body 30. The sheet 40 may be disposed on the open upper surface of the header body 30. The sheet 40 may shield the open one surface of the header body 30. The sheet 40 are formed in a corrugated shape. The sheet 40 may have an elongated shape extending in a longitudinal direction of the header body 30. The plurality of fin tubes 100 are inserted into the sheet 40 (see FIG. 1).

The header cover 50 may define one side or surface of the header body 30. The header cover 50 may be coupled to one end portion of the header body 30. The header cover 50 may be coupled to a front end portion and/or a rear end portion of the header body 30. The header cover 50 may shield the open front surface and/or the rear surface of the header body 30.

The space 301 formed in the header 200 may be surrounded by the header body 30, the sheet 40, and the header cover 50 to be hermetically sealed from the outside.

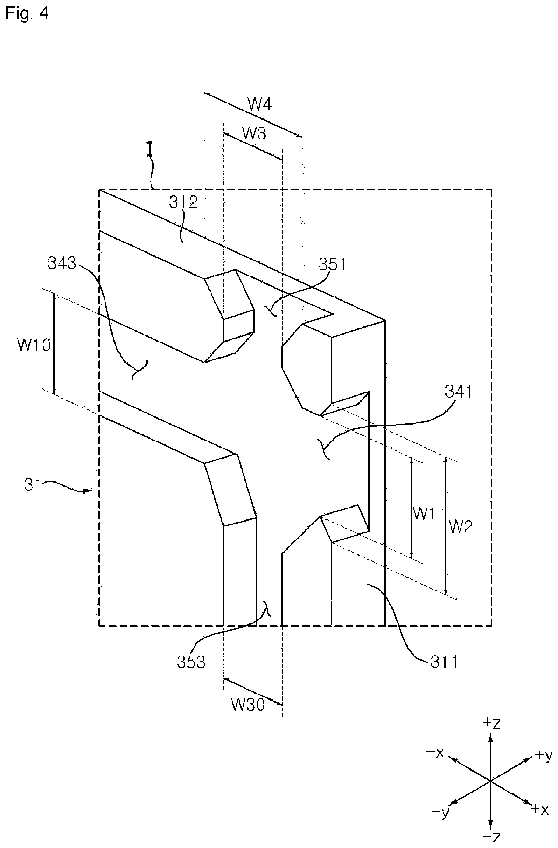

Referring to FIGS. 3 and 4, the header body 30 may include both side surfaces 31 and a lower surface 32 that surround the space 301. The upper surface of the header body 30 may be open. The front surface and/or the rear surface of the header body 30 is open.

The sheet 40 is bent into a corrugated shape. The sheet 40 is bent into the corrugated shape to define a plurality of corrugated portions 41. The plurality of corrugated portions 41 may be arranged in a continuous manner in one direction to have the corrugated shape. The one direction may be referred to as a direction CD in which the plurality of corrugated portions 41 are arranged or a direction CD in which corrugation is formed. The sheet 40 may be elongated in the direction CD in which the plurality of corrugated portions 41 are arranged.

The sheet 40 may be configured to be changeable in length in the direction CD in which the plurality of corrugated portions 41 are arranged. The sheet 40 may be compressed or stretched along the direction CD in which the plurality of corrugated portions 41 are arranged. The sheet 40 may be made of a metal material having elasticity.

A first recess 340 may be formed in an inner part of the side surface 31 (hereinafter referred to as an "inner surface") of the header body 30. The first recess 340 may be formed in an upper portion of the inner surface of the header body 30. The first recess 340 may be recessed from the inner surface of the header body 30 to extend in a first direction. A pair of first recesses 340 may be provided on both side surfaces of the header body 30.

The sheet 40 may be inserted into the first recess 340 formed in the header body 30. The first recess 340 may guide insertion of the sheet 40 in the first direction.

The first direction may be the direction CD in which the plurality of corrugated portions 41 are arranged. The first recess 340 may extend in the direction CD in which the plurality of corrugated portions 41 are arranged. The first recess 340 may guide insertion of the sheet 40 in the direction CD in which the plurality of corrugated portions 41 are arranged.

As the sheet 40 is inserted into the first recess 340 and is compressed in the direction CD in which the plurality of corrugated portions 41 are arranged, the sheet 40 may preferably be inserted into the first recess 340 in the direction CD in which the plurality of corrugated portions 41 are arranged.

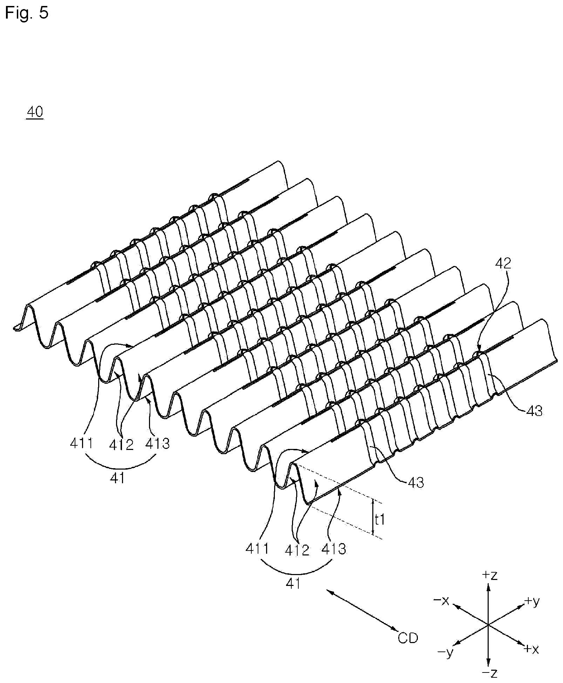

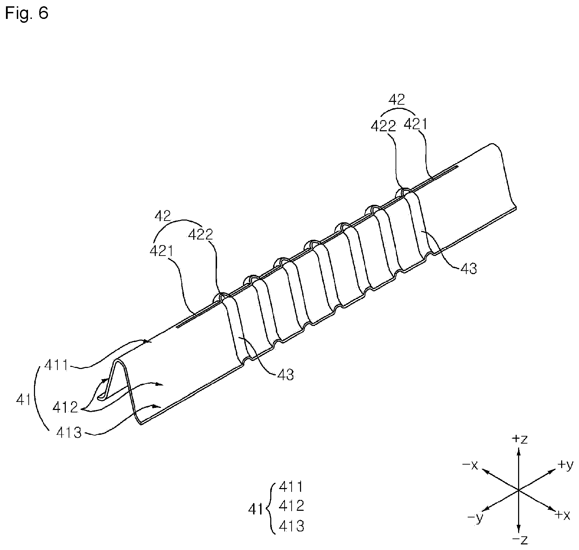

**In** another example, the sheet 40 may be inserted into the first recess 340 in a direction perpendicular to the direction in which the plurality of corrugated portions 41 are arranged. The sheet 40 may be inserted into the first recess 340 in a direction in which a slit 42 (see FIGS. 5 and 6) extends.

The first recess 340 may include a sheet insertion hole 341 connected to the outside and a sheet guide recess 343 extending from the sheet insertion hole 341 in the first direction. The sheet insertion hole 341 may be formed at a front end 311 and/or a rear end (not shown) of the side surface 31 of the header body 30 to communicate with the outside. The sheet guide recess 343 may be connected to the sheet insertion hole 341, and may extend in the longitudinal direction of the header body 30.

The sheet 40 may be inserted from the outside to an inside of the header body 30 through the sheet insertion hole 341. After the sheet 40 is inserted into the sheet insertion hole 341 from the outside, insertion of the sheet 40 may be guided along the sheet guide recess 343.

The sheet insertion hole 341 may have a shape that gradually narrows toward a direction in which the sheet 40 is inserted. A width of the sheet insertion hole 341 in the up-and-down direction may gradually decrease in the direction in which the sheet 40 is inserted.

At least a portion of a surface defining the sheet insertion hole 341 may be inclined so that the sheet insertion hole 341 gradually narrows. At least a portion of the surface defining the sheet insertion hole 341 may be rounded so that the sheet insertion hole 341 gradually narrows.

The sheet 40 may be sequentially inserted from an outside of the sheet insertion hole 341 to an inside of the sheet insertion hole 341. An inner width w1 of the sheet insertion hole 341 may be less than an outer width w2 of the sheet insertion hole 341. The inner width w1 of the sheet insertion hole 341 may be substantially the same as a thickness t1 of the sheet 40. The outer width w2 of the sheet insertion hole 341 may be greater than the thickness t1 of the sheet 40. A width w10 of the sheet guide recess 343 may be substantially the same as the inner width w1 of the sheet insertion hole 341.

The header cover 50 may be coupled to one end portion of the header body 30. The header cover 50 may be in contact with one end portion of the sheet 40. The header cover 50 may be provided in plurality, so as to be coupled to both end portions of the header body 30. A pair of header covers 50 may be in contact with both end portions of the sheet 40. The header cover 50 may be coupled to the front end portion and/or the rear end portion of the header body 30.

A second recess 350 may be formed on the inner surface of the header body 30. The second recess 350 may be recessed from the inner surface of the header body 30 to extend in a second direction. A pair of second recesses 350 may be provided on both side surfaces of the header body 30.

The second direction may be a direction perpendicular to the direction CD in which the plurality of corrugated portions 41 are arranged. For example, when the plurality of corrugated portions 41 are arranged in the front-and-rear direction, the second direction may be the up-and-down direction or the left-and-right direction.

The second recess 350 may include a cover insertion recess 354 formed on the lower surface of the header body 30. The cover insertion recess 354 may be connected to a cover guide recess 353. The cover insertion recess 354 may come in contact with a lower surface 52 of the header cover 50 guided by the cover guide recess 353 to thereby limit an insertion depth of the header cover 50.

The header cover 50 may be inserted into the second recess 350 formed in the header body 30. The second recess 350 may guide insertion of the header cover 50 in the second direction.

The header cover 50 may have a plate shape extending in the second direction. A side surface 51 and the lower surface 52 of the header cover 50 may extend in the second direction. The side surface 51 and the lower surface 52 of the header cover 50 may be perpendicular to each other. Both side surfaces 51 of the header cover 50 may extend in the up-and-down direction. The lower surface 52 of the header cover 50 may extend in the left-and-right direction.

The header cover 50 may include a cover edge portion 53. The cover edge portion 53 may be formed between the side surface 51 and the lower surface 52 of the header cover 50. The cover edge portion 53 may extend in a rounded shape from the lower surface 52 of the header cover 50 to the side surface 51 of the header cover 50.

The second recess 350 may include a cover insertion hole 351 connected to the outside and the cover guide recess 353 extending from the cover insertion hole 351 in the second direction. The cover insertion hole 351 may be formed at an upper end 312 of the side surface 31 of the header body 30 to communicate with the outside. The cover guide recess 353 may be connected to the cover insertion hole 351, and may extend in the up-and-down direction.

The header cover 50 may be inserted from the outside to the inside of the header body 30 through the cover insertion hole 351. After the header cover 50 is inserted into the cover insertion hole 351 from the outside, insertion of the header cover 50 may be guided along the cover guide recess 353.

The cover insertion hole 351 may have a shape that gradually narrows toward a direction in which the header cover 50 is inserted. A width of the cover insertion hole 351 in the front-and-rear direction may gradually decrease in the direction in which the header cover 50 is inserted.

At least a portion of a surface defining the cover insertion hole 351 may be inclined so that the cover insertion hole 351 gradually narrows. At least a portion of the surface defining the cover insertion hole 351 may be rounded so that the cover insertion hole 351 gradually narrows.

The header cover 50 may be sequentially inserted from an outside of the cover insertion hole 351 to an inside of the cover insertion hole 351. An inner width w3 of the cover insertion hole 351 may be less than an outer width w4 of the cover insertion hole 351. The inner width w3 of the cover insertion hole 351 may be substantially the same as a thickness t2 of the header cover 50. The outer width w4 of the cover insertion hole 351 may be greater than the thickness t2 of the header cover 50. A width w30 of the cover guide recess 353 may be substantially the same as the inner width w3 of the cover insertion hole 351.

The sheet insertion hole 341 and the cover insertion hole 351 may be formed at positions adjacent to each other. The first recess 340 and the second recess 350 may intersect each other. The first recess 340 and the second recess 350 may be disposed perpendicular to each other.

Accordingly, even when the sheet 40 is inserted into the first recess 340 while the sheet 40 is not in a correct position, the sheet 40 may be guided to the correct position, allowing the sheet 40 to be easily inserted into the first recess 340.

**In** addition, even when the header cover 50 is inserted into the second recess 350 while the header cover 50 is not in a correct position, the header cover 50 may be guided to the correct position, allowing the header cover 50 to be easily inserted into the second recess 350.

Further, even when the sheet 40 compressed in one direction applies pressure to the header cover 50 while being stretched in another direction, the header cover 50 may be securely fixed to thereby achieve the structural stability.

Referring to FIGS. 5 and 6, the sheet 40 may be formed in a corrugated shape to define the plurality of corrugated portions 41. The plurality of corrugated portions 41 may include a plurality of crest portions 411 and a plurality of trough portions 413 alternately arranged with each other. The plurality of corrugated portions 41 may include a plurality of flat portions 412 formed at intervals between the plurality of crest portions 411 and the plurality of trough portions 413 in an inclined manner.

The crest portion 411 may extend in a direction perpendicular to the direction CD in which the plurality of corrugated portions 41 are arranged. The flat portion 412 may extend in a direction perpendicular to the direction CD in which the plurality of corrugated portions 41 are arranged. The trough portion 413 may extend in a direction perpendicular to the direction CD in which the plurality of corrugated portions 41 are arranged.

The fin tube 10 is inserted into the slit 42 formed on the sheet 40. A plurality of slits 42 are provided. The plurality of slits 42 may extend in a direction intersecting the direction CD in which the plurality of corrugated portions 41 are arranged. The plurality of slits 42 may extend perpendicular to the direction CD in which the plurality of corrugated portions 41 are arranged. The slit 42 may extend along the crest portion 411 and/or the trough portion 413.

The slit 42 may include a fin slit portion 421 into which the fin 101 (see FIG. 7) is inserted. The slit 42 may include a tube slit portion 422 into which the tube 102 (see FIG. 7) is inserted.

The fin slit portion 421 may be formed in a shape corresponding to the fin 101 of the fin tube 10. The fin slit portion 421 may have a thin slot shape. The fin slit portion 421 may have a width corresponding to a thickness of the fin 101. The fin slit portion 421 may extend along the crest portion 411 and/or the trough portion 413.

The tube slit portion 422 may be formed in a shape corresponding to the tube 102. For example, the tube slit portion 422 may have a circular shape. The tube slit portion 422 may have a diameter corresponding to the tube 102. A plurality of tube slit portions 422 may be arranged along the crest portion 411 and/or the trough portion 413. The plurality of tube slit portions 422 may be formed between fin slit portions 421. A width of the tube slit portion 422 may be greater than a width of the fin slit portion 421.

The slit 42 may be spaced inward from both ends of the sheet 40 by a predetermined distance. The fin slit portion 421 and the tube slit portion 422 may be alternately arranged in one direction.

The corrugated portion 41 of the sheet 40 may include a groove 43. The groove 43 may be configured to be in contact with the tube slit portion 422. The groove 43 may extend from the tube slit portion 422 along the corrugated shape of the sheet 40.

The groove 43 may be continuous in the front-and-rear direction from a crest portion 411, to a flat portion 412 and a trough portion 413 of a corrugated portion 41 among the plurality of corrugated portions 41, and to a crest portion 411 of an adjacent corrugated portion 41.

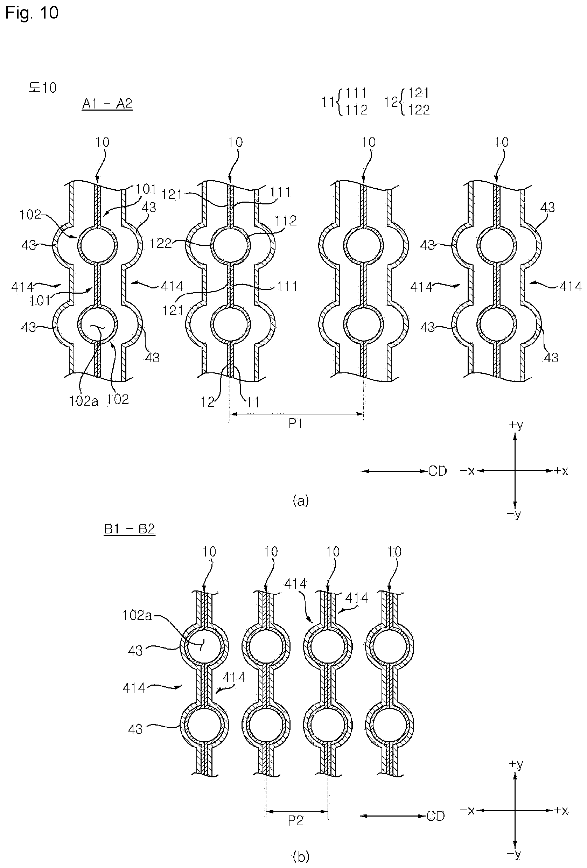

The groove 43 may have a shape in which the sheet 40 is recessed into a semicircular shape. The groove 43 may have a recessed shape to surround the tube 102 inserted into the tube slit portion 422 (see FIG. 10).

Accordingly, the fin tube 10 inserted into the slit 42 receives pressure in a direction in which the sheet 40 is compressed to thereby increase adhesion between the fin tube 10 and the sheet 40. As a result, airtightness may be achieved, refrigerant leakage may be prevented, and the structural stability may be ensured.

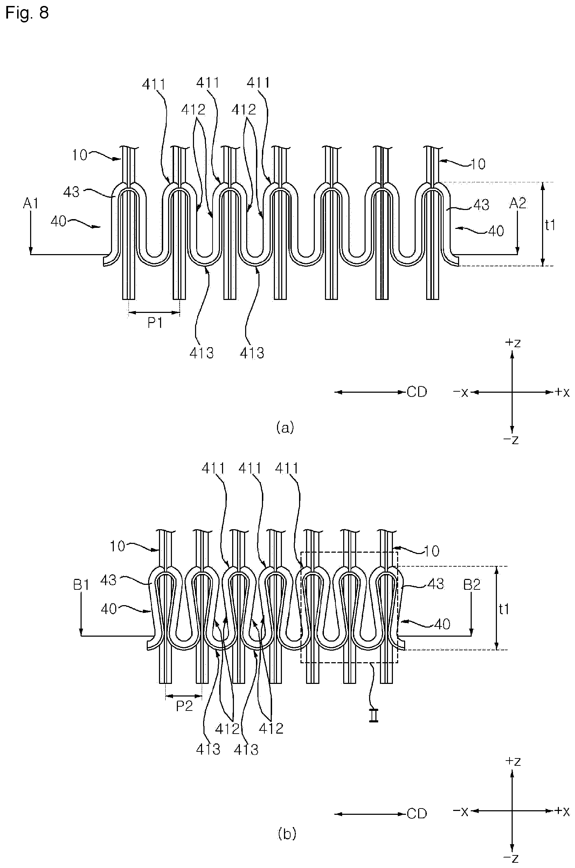

Referring to FIGS. 7 and 8, (a) of FIG. 7 and (a) of FIG. 8 illustrate the sheet 40 before being compressed, and (b) of FIG. 7 and (b) of FIG. 8 illustrate the sheet 40 after being compressed.

A pitch P2 between the plurality of corrugated portions 41 after the sheet 40 is compressed may be greater than a pitch P1 between the plurality of corrugated portions 41 before the sheet 40 is compressed.

A pair of flat portions 412 formed adjacent to the slit 42 may face opposite sides or surfaces of one end portion of the fin tube 10 inserted into the slit 42.

The one end portion of the fin tube 10 may be inserted at least as deep as the thickness t1 of the sheet 40. The one end portion of the fin tube 10 may be inserted more deeply than the thickness t1 of the sheet 40. The fin tube 10 inserted into the slit 42 formed in the crest portion 411 of the sheet 40 may protrude downward further than the trough portion 413.

Referring to (a) of FIG. 7 and (a) of FIG. 8, the fin tube 10 may be inserted into the sheet 40 in a stretched state before being compressed.

As the pitch P1 between the plurality of corrugated portions 41 is relatively wide, among the plurality of fin tubes 100, any one fin tube 10 and another fin tube 10 adjacent to the one fin tube 10 may be spaced apart by the pitch P1. Accordingly, each of the plurality of fin tubes 100 may be easily inserted into the sheet 40, thereby facilitating the assembly of the header 20 and the fin tube 10.

Referring to (b) of FIG. 7 and (b) of FIG. 8, the sheet 40 into which the fin tube 10 is inserted may be compressed in the direction CD in which the plurality of corrugated portions 41 are arranged. When the sheet 40 is compressed, a gap between the flat portion 412, which faces opposite sides or surfaces of the fin tube 10, and the fin tube 10 may be reduced.

As the pitch P2 between the plurality of corrugated portions 41 is narrow, a gap between the fin tube 10 and the sheet 40 may be reduced, and as a filler metal is added to the gap, the quality of brazing may be improved.

Accordingly, the fin tube 10 inserted into the sheet 40 receives pressure from the sheet 40 in a direction in which the sheet 40 is compressed to thereby achieve the stability of the coupling structure.

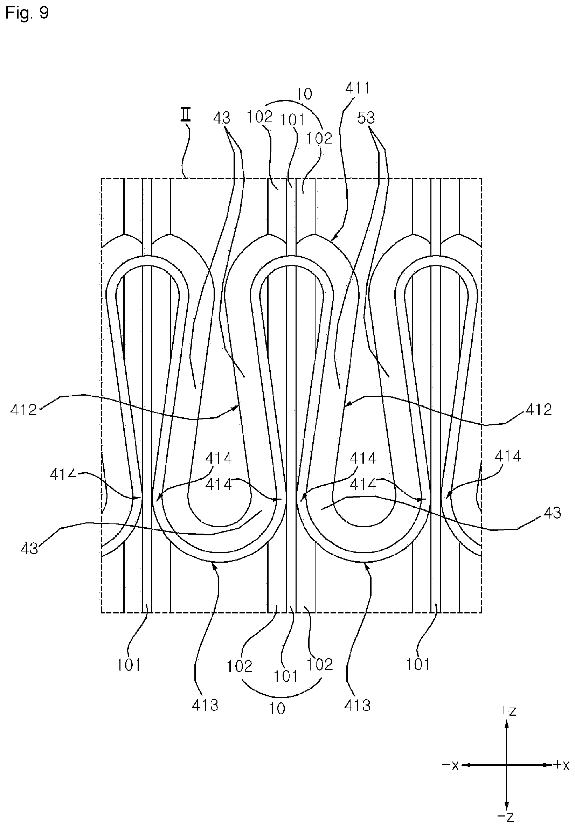

Referring to FIG. 9, the slit 42 may be formed on the crest portion 411. A boundary portion 414 may be defined as a portion between the flat portion 412 and the trough portion 413.

When the sheet 40 is compressed, the boundary portion 414 may come in contact with one end portion of the fin tube 10 inserted into the slit 42. The boundary portion 414 may press both sides or surfaces of the fin tube 10.

Referring to FIG. 10, (a) of FIG. 10 illustrates the sheet 40 before being compressed, and (b) of FIG. 10 illustrates the sheet 40 after being compressed. A first plate 11 and a second plate 12 may be coupled to each other to define the fin tube 10. An inner surface of the first plate 11 and an inner surface of the second plate 12 may be coupled to each other to define the fin 101 and the tube 102 of the fin tube 10. A tube hole 102a through which refrigerant flows may be formed in the tube 102.

The first plate 11 may include a first flat portion 111 formed at a position corresponding to the fin 101 and a first tube portion 112 formed at a position corresponding to the tube 102. The first flat portion 111 and the first tube portion 112 may extend in one direction, and may each be provided in plurality to be alternately arranged with each other. The first tube portion 112 may have a semicircular cross section.

The second plate 12 may include a second flat portion 121 formed at a position corresponding to the fin 101 and a second tube portion 122 formed at a position corresponding to the tube 102. The second flat portion 121 and the second tube portion 122 may extend in one direction, and may each be provided in plurality to be alternately arranged with each other. The second tube portion 122 may have a semicircular cross section.

The first flat portion 111 and the second flat portion 121 may be coupled to be in contact with each other to define the fin 101. In addition, the first tube portion 112 and the second tube portion 122 may be coupled to be in contact with each other to define the tube 102 having the tube hole 102a.

When the sheet 40 is compressed, the boundary portion 414 may come in contact with the fin 101. When sheet 40 is compressed, the boundary portion 414 may come in contact with tube 102. The boundary portion 414 may press both sides or surfaces of the fin tube 10. The boundary portion 414 may press the first plate 11 and the second plate 12 in a direction in which the first plate 11 and the second plate 12 are coupled to each other. The groove 43 formed in the boundary portion 414 may be in close contact with the tube 102.

Accordingly, the structural stability of the fin tube 10 and the header 20 against internal pressure due to the flow of refrigerant may be achieved, and a gap between the coupling structures may be narrowed to thereby reduce the brazing defect rate and prevent refrigerant leakage.

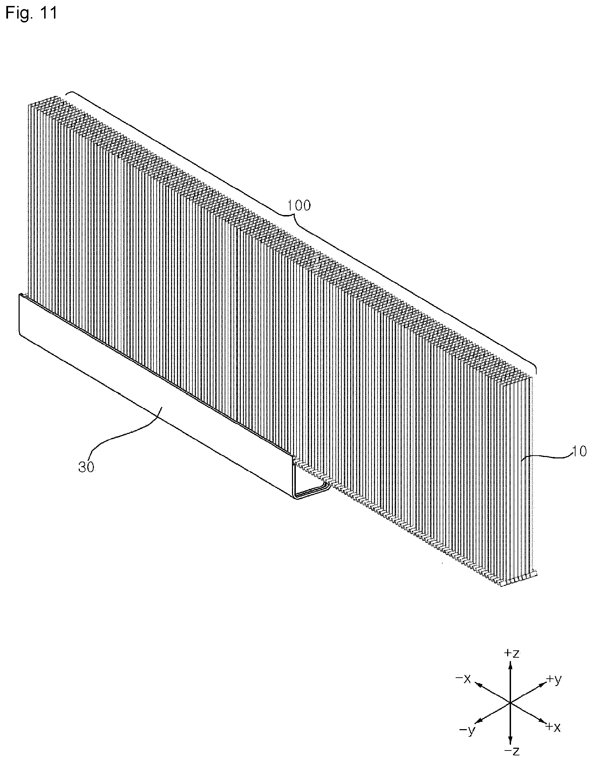

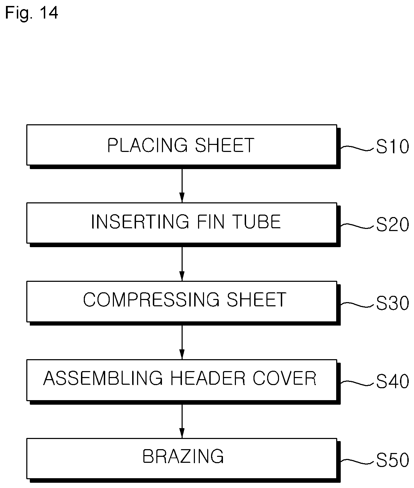

Referring to FIGS. 11 to 14, a method of manufacturing the heat exchanger includes: placing a sheet 40 having a plurality of slits 42 (see FIG. 5) on one open side of a header body 30 to be longer than a length of the header body 30 (S10); inserting one end portion of a fin tube 10 into each of the plurality of slits 42 of the sheet 40 (S20); and compressing a corrugated portion 41 of the sheet 40 in a longitudinal direction of the header body 30 to allow the sheet 40 to be drawn into the header body 30 (S30). The order of the step S10 and the step S20 may be interchanged.

In addition, coupling the header cover 50 to one side surface portion of the header body 30 (S40) may be further included to hermetically seal the header 20 from the outside.

Also, brazing a gap between the compressed sheet 40 and the fin tube 10 with a filler metal (S50) may be further included.

Although preferred embodiments of the present invention have been shown and described herein, the present invention is not limited to the specific embodiments described above. It will be understood that various modifications and changes can be made by those skilled in the art without departing from the idea and scope of the present invention as defined by the appended claims. Therefore, it shall be considered that such modifications, and changes thereof are all included within the scope of the present disclosure.

## Claims

1. A heat exchanger comprising:
a plurality of fin tubes (100) each comprising a fin (101) for heat transfer and a tube (102) through which refrigerant flows, the fin (101) and the tube (102) being integrally formed with each other; and
a header (20) coupled to one end portions of the plurality of fin tubes (100),
wherein the header (20) comprises:
a header body (30) open at one side; and
a sheet (40) disposed on the open one side of the header body (30), having a plurality of slits (42) into which the one end portions of the plurality of fin tubes (100) are respectively inserted, and bent into a corrugated shape to define a plurality of corrugated portions (41),
wherein the plurality of corrugated portions (41) of the sheet (40) are compressed in a longitudinal direction of the sheet (40) into the header body (30).

2. The heat exchanger of claim 1, wherein the plurality of slits (42) extend in a direction intersecting a direction in which the plurality of corrugated portions (41) are arranged,
and preferably
wherein the plurality of slits (42) extend in a direction perpendicular to the direction in which the plurality of corrugated portions (41) are arranged.

3. The heat exchanger of claim 1, wherein the plurality of corrugated portions (41) comprise:
a plurality of crest portions (411) and a plurality of trough portions (413) alternately arranged with each other; and
a plurality of flat portions (412) formed at intervals between the plurality of crest portions (411) and the plurality of trough portions (413) in an inclined manner, and
wherein the plurality of slits (42) extend along the plurality of crest portions (411) and/or the plurality of trough portions (413).

4. The heat exchanger of claim 3, wherein a pair of flat portions (412), formed adjacent to a slit (42) among the plurality of slits (42), face opposite surfaces of one end portion of one of the plurality of fin tubes (100) inserted into the slit (42);
or
wherein each of the plurality of slits (42) is formed on one of the plurality of crest portions (411), and
wherein, when a portion between each trough portion (413) and each flat portion (412) is defined as a boundary portion (414), the boundary portion (414) is in contact with one end portion of a fin tube (100), among the plurality of fin tubes (100), inserted into one of the plurality of slits (42);
or
wherein the sheet (40) is configured such that the plurality of corrugated portions (41) are compressible in a direction in which the plurality of corrugated portions (41) are arranged, and
wherein a pitch between the plurality of trough portions (413) decreases when the sheet (40) is compressed.

5. The heat exchanger of claim 1, wherein the one end portions of the plurality of fin tubes (100) are inserted at least as deep as a thickness of the sheet (40).

6. The heat exchanger of claim 1, wherein the plurality of slits (42) each comprises:
a fin slit portion (421) into which the fin (100) is inserted; and
a tube slit portion (422) into which the tube (102) is inserted;
and preferably
wherein the sheet (40) comprises a groove (43) extending from the tube slit portion (422) along the corrugated shape of the sheet (40) and recessed to surround the tube (102) inserted into the tube slit portion (422),
and preferably
wherein at least a portion of the groove (43) is in close contact with the tube (102).

7. The heat exchanger of claim 1, wherein the header body (30) is provided with a first recess (340) recessed from an inner surface thereof to extend in a first direction and guiding insertion of the sheet (40) in the first direction.

8. The heat exchanger of claim 7, wherein the first direction is a direction in which the plurality of corrugated portions (41) are arranged,
or
wherein the first recess (340) comprises:
a sheet insertion hole (341) connected to an outside so as to allow the sheet (40) to be inserted from the outside; and
a sheet guide recess (343) extending from the sheet insertion hole (341) in the first direction and guiding insertion of the sheet (40),
and preferably
wherein the sheet insertion hole (341) has a shape that gradually narrows toward a direction in which the sheet (40) is inserted.

9. The heat exchanger of claim 1, wherein the header (20) comprises a header cover (50) coupled to one end portion of the header body (30) to be in contact with one end portion of the sheet (40).

10. The heat exchanger of claim 9, wherein the header body (30) is provided with a second recess (350) recessed from an inner surface thereof to extend in a second direction and guiding insertion of the header cover (50) in the second direction.

11. The heat exchanger of claim 10, wherein the second direction is a direction perpendicular to a direction in which the plurality of corrugated portions (41) are arranged,
and preferably
wherein a side surface and a lower surface of the header cover (50) extend in the second direction, and
wherein the header cover (50) comprises a cover edge portion (53) formed between the side surface and the lower surface of the header cover (50) and extending in a rounded shape from the lower surface of the header cover (50) to the side surface of the header cover (50).

12. The heat exchanger of claim 10, wherein the second recess (350) comprises:
a cover insertion hole (351) connected to an outside so as to allow the header cover (50) to be inserted from the outside; and
a cover guide recess (353) extending from the cover insertion hole (351) in the second direction and guiding insertion of the header cover (50);
and preferably
wherein the cover insertion hole (351) has a shape that gradually narrows toward a direction in which the header cover (50) is inserted.

13. The heat exchanger of claim 1, wherein a gap between the sheet (40) and each fin tube (100) is brazed with a filler metal.

14. A method of manufacturing a heat exchanger, the method comprising:
placing (S10) a sheet (40) having a plurality of corrugated portions (41) and a plurality of slits (42) formed along the plurality of corrugated portions (41) on one open side of a header body (30) to be longer than a length of the header body (30);
inserting (S20) one end portions of a plurality of fin tubes (100) into the plurality of slits (42); and
compressing (S30) the plurality of corrugated portions (41) in a longitudinal direction of the sheet (40) to allow the sheet (40) to be drawn into the header body (30).

15. The method of claim 14, further comprising, after the sheet (40) is drawn into the header body (30), coupling (S40) a header cover (50) to a side surface portion of the header body (30),
and/or
the method further comprising brazing (S50) a gap between the sheet (40) and each fin tube (100) with a filler metal.

## Patentansprüche

1. Wärmetauscher, umfassend:
eine Vielzahl von Rippenrohren (100), die jeweils eine Rippe (101) zur Wärmeübertragung und ein Rohr (102), durch das ein Kältemittel strömt, aufweisen, wobei die Rippe (101) und das Rohr (102) einstückig miteinander ausgebildet sind; und
einen Sammler (20), der mit Endabschnitten der Vielzahl von Rippenrohren (100) verbunden ist,
wobei der Sammler (20) umfasst:
einen Sammlerkörper (30), der auf einer Seite offen ist; und
ein Blech (40), das an der offenen Seite des Sammlerkörpers (30) angeordnet ist, eine Vielzahl von Schlitzen (42) aufweist, in die die Endabschnitte der Vielzahl von Rippenrohren (100) jeweils eingesetzt sind, und in eine gewellte Form gebogen ist, um eine Vielzahl von Wellenabschnitten (41) zu definieren,
wobei die Vielzahl der Wellenabschnitte (41) des Blechs (40) in einer Längsrichtung des Blechs (40) in den Sammlerkörper (30) komprimiert ist.

2. Wärmetauscher nach Anspruch 1,
wobei sich die Vielzahl der Schlitze (42) in einer Richtung erstreckt, die eine Richtung schneidet, in der die Vielzahl der Wellenabschnitte (41) angeordnet ist,
und bevorzugt
wobei sich die Vielzahl der Schlitze (42) in einer Richtung erstreckt, die senkrecht zu der Richtung ist, in der die Vielzahl der Wellenabschnitte (41) angeordnet ist.

3. Wärmetauscher nach Anspruch 1,
wobei die Vielzahl der Wellenabschnitte (41) umfasst:
eine Vielzahl von Scheitelabschnitten (411) und eine Vielzahl von Talabschnitten (413), die abwechselnd zueinander angeordnet sind; und
eine Vielzahl von Flachabschnitten (412), die in geneigter Weise in Abständen zwischen den Scheitelabschnitten (411) und den Talabschnitten (413) ausgebildet sind, und
wobei sich die Vielzahl der Schlitze (42) entlang der Vielzahl der Scheitelabschnitte (411) und/oder der Vielzahl der Talabschnitte (413) erstreckt.

4. Wärmetauscher nach Anspruch 3,
wobei ein Paar von Flachabschnitten (412), die benachbart zu einem Schlitz (42) unter der Vielzahl der Schlitze (42) ausgebildet sind, entgegengesetzten Oberflächen eines Endabschnitts eines der in den Schlitz (42) eingesetzten Rippenrohre (100) gegenüberliegen;
oder
wobei jeder der Schlitze (42) auf einem der Scheitelabschnitte (411) ausgebildet ist, und
wobei, wenn ein Abschnitt zwischen jedem Talabschnitt (413) und jedem Flachabschnitt (412) als Grenzabschnitt (414) definiert ist, der Grenzabschnitt (414) mit einem Endabschnitt eines der in einen der Schlitze (42) eingesetzten Rippenrohre (100) in Kontakt steht;
oder
wobei das Blech (40) derart ausgebildet ist, dass die Vielzahl der Wellenabschnitte (41) in der Richtung, in der die Wellenabschnitte (41) angeordnet sind, komprimierbar ist, und
wobei ein Teilungsabstand zwischen der Vielzahl der Talabschnitte (413) abnimmt, wenn das Blech (40) komprimiert wird.

5. Wärmetauscher nach Anspruch 1,
wobei die Endabschnitte der Vielzahl der Rippenrohre (100) zumindest so tief eingesetzt sind wie eine Dicke des Blechs (40).

6. Wärmetauscher nach Anspruch 1,
wobei jeder der Schlitze (42) umfasst:
einen Rippenschlitzabschnitt (421), in den die Rippe (101) eingesetzt ist; und
einen Rohrschlitzabschnitt (422), in den das Rohr (102) eingesetzt ist;
und bevorzugt
wobei das Blech (40) eine Nut (43) umfasst, die sich von dem Rohrschlitzabschnitt (422) entlang der gewellten Form des Blechs (40) erstreckt und vertieft ausgebildet ist, um das in den Rohrschlitzabschnitt (422) eingesetzte Rohr (102) zu umgeben,
und bevorzugt
wobei zumindest ein Teil der Nut (43) eng an dem Rohr (102) anliegt.

7. Wärmetauscher nach Anspruch 1,
wobei der Sammlerkörper (30) mit einer ersten Ausnehmung (340) versehen ist, die von einer Innenoberfläche des Sammlerkörpers (30) aus vertieft ist, sich in einer ersten Richtung erstreckt und das Einführen des Blechs (40) in der ersten Richtung führt.

8. Wärmetauscher nach Anspruch 7,
wobei die erste Richtung eine Richtung ist, in der die Vielzahl der Wellenabschnitte (41) angeordnet ist,
oder
wobei die erste Ausnehmung (340) umfasst:
eine Blecheinführöffnung (341), die mit der Außenseite verbunden ist, um das Einführen des Blechs (40) von außen zu ermöglichen; und
eine Blechführungsnut (343), die sich von der Blecheinführöffnung (341) in der ersten Richtung erstreckt und das Einführen des Blechs (40) führt,
und bevorzugt
wobei die Blecheinführöffnung (341) eine Form aufweist, die sich allmählich in der Richtung verjüngt, in der das Blech (40) eingeführt wird.

9. Wärmetauscher nach Anspruch 1,
wobei der Sammler (20) eine Sammlerabdeckung (50) umfasst, die mit einem Endabschnitt des Sammlerkörpers (30) verbunden ist, um mit einem Endabschnitt des Blechs (40) in Kontakt zu stehen.

10. Wärmetauscher nach Anspruch 9,
wobei der Sammlerkörper (30) mit einer zweiten Ausnehmung (350) versehen ist, die von einer Innenoberfläche des Sammlerkörpers (30) aus vertieft ist, sich in einer zweiten Richtung erstreckt und das Einführen der Sammlerabdeckung (50) in der zweiten Richtung führt.

11. Wärmetauscher nach Anspruch 10,
wobei die zweite Richtung senkrecht zu der Richtung ist, in der die Vielzahl der Wellenabschnitte (41) angeordnet ist,
und bevorzugt
wobei eine Seitenfläche und eine Unterfläche der Sammlerabdeckung (50) sich in der zweiten Richtung erstrecken, und
wobei die Sammlerabdeckung (50) einen Abdeckkantenabschnitt (53) umfasst, der zwischen der Seitenfläche und der Unterfläche der Sammlerabdeckung (50) ausgebildet ist und sich in einer abgerundeten Form von der Unterfläche zur Seitenfläche erstreckt.

12. Wärmetauscher nach Anspruch 10,
wobei die zweite Ausnehmung (350) umfasst:
eine Abdeckungseinführöffnung (351), die mit der Außenseite verbunden ist, um das Einführen der Sammlerabdeckung (50) von außen zu ermöglichen; und
eine Abdeckungsführungsnut (353), die sich von der Abdeckungseinführöffnung (351) in der zweiten Richtung erstreckt und das Einführen der Sammlerabdeckung (50) führt;
und bevorzugt
wobei die Abdeckungseinführöffnung (351) eine Form aufweist, die sich allmählich in der Richtung verjüngt, in der die Sammlerabdeckung (50) eingeführt wird.

13. Wärmetauscher nach Anspruch 1,
wobei ein Spalt zwischen dem Blech (40) und jedem Rippenrohr (100) mit einem Lotmetall verlötet ist.

14. Verfahren zur Herstellung eines Wärmetauschers, umfassend:
Anordnen (S10) eines Blechs (40), das eine Vielzahl von Wellenabschnitten (41) und eine Vielzahl von entlang der Wellenabschnitte (41) ausgebildeten Schlitzen (42) aufweist, an einer offenen Seite eines Sammlerkörpers (30), wobei das Blech (40) länger ist als eine Länge des Sammlerkörpers (30);
Einsetzen (S20) von Endabschnitten einer Vielzahl von Rippenrohren (100) in die Vielzahl von Schlitzen (42); und
Zusammendrücken (S30) der Vielzahl von Wellenabschnitten (41) in einer Längsrichtung des Blechs (40), um zu ermöglichen, dass das Blech (40) in den Sammlerkörper (30) hineingezogen wird.

15. Verfahren nach Anspruch 14,
ferner umfassend, nachdem das Blech (40) in den Sammlerkörper (30) hineingezogen wurde, das Verbinden (S40) einer Sammlerabdeckung (50) mit einem Seitenflächenabschnitt des Sammlerkörpers (30), und/oder
ferner umfassend das Verlöten (S50) eines Spalts zwischen dem Blech (40) und jedem Rippenrohr (100) mit einem Lotmetall.

## Revendications

1. Échangeur de chaleur, comprenant :
une pluralité de tubes à ailettes (100), chacun comprenant une ailette (101) destinée au transfert de chaleur et un tube (102) à travers lequel circule un fluide frigorigène, l'ailette (101) et le tube (102) étant formés d'une seule pièce ; et
un collecteur (20) couplé à des portions d'extrémité de la pluralité de tubes à ailettes (100), le collecteur (20) comprenant :
un corps de collecteur (30) ouvert sur un côté ; et
une tôle (40) disposée sur le côté ouvert du corps de collecteur (30), comportant une pluralité de fentes (42) dans lesquelles sont respectivement insérées les portions d'extrémité de la pluralité de tubes à ailettes (100), et pliée selon une forme ondulée afin de définir une pluralité de sections ondulées (41),
dans lequel la pluralité de sections ondulées (41) de la tôle (40) est comprimée dans une direction longitudinale de la tôle (40) à l'intérieur du corps de collecteur (30).

2. Échangeur de chaleur selon la revendication 1,
dans lequel la pluralité de fentes (42) s'étend dans une direction qui coupe une direction dans laquelle la pluralité de sections ondulées (41) est disposée,
et de préférence
dans lequel la pluralité de fentes (42) s'étend dans une direction perpendiculaire à la direction dans laquelle la pluralité de sections ondulées (41) est disposée.

3. Échangeur de chaleur selon la revendication 1,
dans lequel la pluralité de sections ondulées (41) comprend :
une pluralité de sections de crête (411) et une pluralité de sections de creux (413) disposées alternativement ; et
une pluralité de sections planes (412) formées à intervalles entre les sections de crête (411) et les sections de creux (413) de manière inclinée, et
dans lequel la pluralité de fentes (42) s'étend le long de la pluralité de sections de crête (411) et/ou de la pluralité de sections de creux (413).

4. Échangeur de chaleur selon la revendication 3,
dans lequel une paire de sections planes (412), formées de manière adjacente à une fente (42) parmi la pluralité de fentes (42), fait face à des surfaces opposées d'une portion d'extrémité de l'un des tubes à ailettes (100) inséré dans la fente (42) ;
ou
dans lequel chacune des fentes (42) est formée sur l'une des sections de crête (411), et
dans lequel, lorsqu'une portion située entre chaque section de creux (413) et chaque section plane (412) est définie comme une section frontière (414), la section frontière (414) est en contact avec une portion d'extrémité d'un tube à ailette (100), parmi la pluralité de tubes à ailettes (100), inséré dans l'une des fentes (42) ;
ou
dans lequel la tôle (40) est configurée de sorte que la pluralité de sections ondulées (41) soit compressible dans la direction dans laquelle la pluralité de sections ondulées (41) est disposée, et
dans lequel un pas entre la pluralité de sections de creux (413) diminue lorsque la tôle (40) est comprimée.

5. Échangeur de chaleur selon la revendication 1,
dans lequel les portions d'extrémité de la pluralité de tubes à ailettes (100) sont insérées au moins sur une profondeur correspondant à une épaisseur de la tôle (40).

6. Échangeur de chaleur selon la revendication 1,
dans lequel chacune des fentes (42) comprend :
une portion de fente pour ailette (421) dans laquelle l'ailette (101) est insérée ; et
une portion de fente pour tube (422) dans laquelle le tube (102) est inséré ;
et de préférence
dans lequel la tôle (40) comprend une rainure (43) s'étendant depuis la portion de fente pour tube (422) le long de la forme ondulée de la tôle (40) et formée en creux de manière à entourer le tube (102) inséré dans la portion de fente pour tube (422),
et de préférence
dans lequel au moins une partie de la rainure (43) est en contact étroit avec le tube (102).

7. Échangeur de chaleur selon la revendication 1,
dans lequel le corps de collecteur (30) est pourvu d'un premier évidement (340) formé en retrait à partir d'une surface intérieure de celui-ci, s'étendant dans une première direction et guidant l'insertion de la tôle (40) dans la première direction.

8. Échangeur de chaleur selon la revendication 7,
dans lequel la première direction est une direction dans laquelle la pluralité de sections ondulées (41) est disposée,
ou
dans lequel le premier évidement (340) comprend :
une ouverture d'insertion de tôle (341) reliée à l'extérieur de manière à permettre l'insertion de la tôle (40) depuis l'extérieur ; et
une rainure de guidage de tôle (343) s'étendant depuis l'ouverture d'insertion de tôle (341) dans la première direction et guidant l'insertion de la tôle (40),
et de préférence
dans lequel l'ouverture d'insertion de tôle (341) présente une forme qui se rétrécit progressivement dans la direction d'insertion de la tôle (40).

9. Échangeur de chaleur selon la revendication 1,
dans lequel le collecteur (20) comprend un couvercle de collecteur (50) couplé à une portion d'extrémité du corps de collecteur (30) de manière à être en contact avec une portion d'extrémité de la tôle (40).

10. Échangeur de chaleur selon la revendication 9,
dans lequel le corps de collecteur (30) est pourvu d'un deuxième évidement (350) formé en retrait à partir d'une surface intérieure de celui-ci, s'étendant dans une deuxième direction et guidant l'insertion du couvercle de collecteur (50) dans la deuxième direction.

11. Échangeur de chaleur selon la revendication 10,
dans lequel la deuxième direction est perpendiculaire à la direction dans laquelle la pluralité de sections ondulées (41) est disposée,
et de préférence
dans lequel une surface latérale et une surface inférieure du couvercle de collecteur (50) s'étendent dans la deuxième direction, et
dans lequel le couvercle de collecteur (50) comprend une portion de bord de couvercle (53) formée entre la surface latérale et la surface inférieure du couvercle de collecteur (50) et s'étendant selon une forme arrondie depuis la surface inférieure vers la surface latérale.

12. Échangeur de chaleur selon la revendication 10,
dans lequel le deuxième évidement (350) comprend :
une ouverture d'insertion de couvercle (351) reliée à l'extérieur de manière à permettre l'insertion du couvercle de collecteur (50) depuis l'extérieur ; et
une rainure de guidage de couvercle (353) s'étendant depuis l'ouverture d'insertion de couvercle (351) dans la deuxième direction et guidant l'insertion du couvercle de collecteur (50) ;
et de préférence
dans lequel l'ouverture d'insertion de couvercle (351) présente une forme qui se rétrécit progressivement dans la direction d'insertion du couvercle de collecteur (50).

13. Échangeur de chaleur selon la revendication 1,
dans lequel un jeu entre la tôle (40) et chaque tube à ailette (100) est brasé à l'aide d'un métal d'apport.

14. Procédé de fabrication d'un échangeur de chaleur, le procédé comprenant :
la mise en place (S10) d'une tôle (40) comportant une pluralité de sections ondulées (41) et une pluralité de fentes (42) formées le long de la pluralité de sections ondulées (41) sur un côté ouvert d'un corps de collecteur (30), la tôle (40) étant plus longue qu'une longueur du corps de collecteur (30) ;
l'insertion (S20) de portions d'extrémité d'une pluralité de tubes à ailettes (100) dans la pluralité de fentes (42) ; et
la compression (S30) de la pluralité de sections ondulées (41) dans une direction longitudinale de la tôle (40) afin de permettre que la tôle (40) soit tirée à l'intérieur du corps de collecteur (30).

15. Procédé selon la revendication 14,
comprenant en outre, après que la tôle (40) a été tirée à l'intérieur du corps de collecteur (30), l'assemblage (S40) d'un couvercle de collecteur (50) à une portion de surface latérale du corps de collecteur (30), et/ou
comprenant en outre le brasage (S50) d'un jeu entre la tôle (40) et chaque tube à ailette (100) à l'aide d'un métal d'apport.
